# EUROPEAN PATENT SPECIFICATION

(11) **EP 0 381 302 B1**
(45) Date of publication and mention of the grant of the patent: **19.01.1994**
(21) Application number: 90200728.5
(22) Date of filing: 09.10.1987
(51) Int. Cl.: G01F 1/84

(54) **Measuring mass flow rates of fluid flows**
Messen von Massendurchflussraten von Fluidströmen
Mesure de débits massiques d'écoulements de fluide

(30) Priority: 10.10.1986 US 917631
(43) Date of publication of application: 08.08.1990
(62) Divisional of application: 87308967.6
(73) Proprietor: INTERNATIONAL CONTROL AUTOMATION FINANCE S.A., Ville de Luxembourg (LU)
(72) Inventor: Mizerak, Dennis S., Brunswick, Ohio 44213 (US)
(74) Representative: Cotter, Ivan John

(56) References cited:
- WO-A-86/00699

## Description

This invention relates to measuring the mass flow rate of a fluid flow.

Devices are known which utilise the effect of angular motion on a moving fluid to directly measure mass flow. See for example, US Patents Nos. US-A-2865201 (Roth), US-A-3355944 and US-A-3485098 (Sipin).

US Patent No. US-A-4109524 (Smith) discloses an apparatus and method for measuring mass flow rate through a conduit by reciprocating a section of the conduit to produce longitudinal angular rotation of that section. Linkages are connected to the section both for reciprocating it and for measuring a force exerted on the section, which force is due to an apparent force produced by mass flow through the conduit section. A direct measurement can thus be taken of the mass flow rate in this manner.

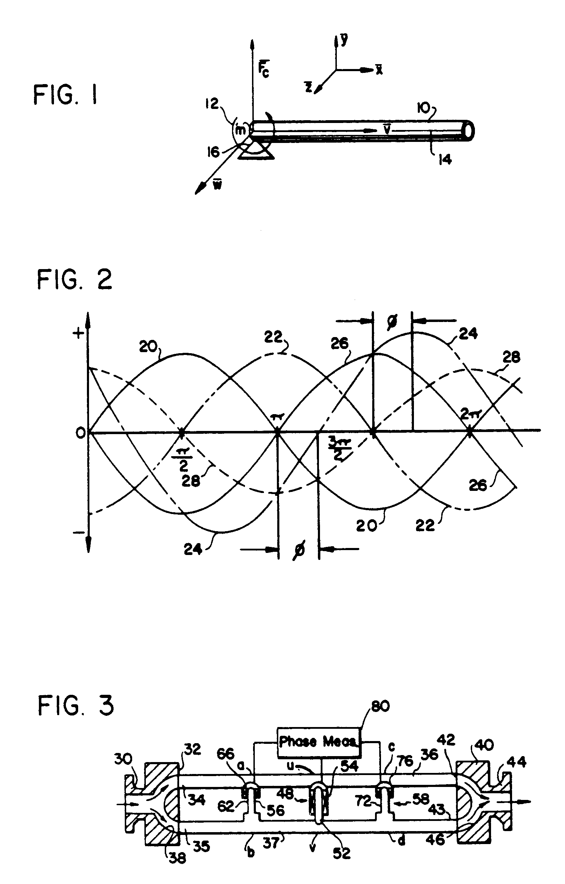

To understand how mass flow rate can be measured using the effects of this force, reference is now made to Figure 1 of the accompanying drawings which shows an arrangement of vectors on an X, Y, Z coordinate system.

When a moving mass m with a velocity vector v̅ is acted upon by a force that causes angular velocity w about some axis, a force F_{c} is observed, the force conforming to the relationship:${\overline{\text{F}}}_{\text{c}} \text{= 2m} \overline{\text{w}} \text{x} \overline{\text{v}}$

If a flow tube or conduit for carrying a fluid, shown at 10 in Figure 1, is rotated in the F̅_{c} - v̅ plane, in the clockwise direction shown by an arrow 12, this causes an angular velocity w̅ as shown in Figure 1. If, however, rather than rotating the conduit 10 in the one direction shown by an arrow 12, the conduit is caused to oscillate back and forth about its pivot point, which is shown at 16, the magnitude and polarity of the angular velocity w̅ will also oscillate and, therefore, the magnitude and polarity of the force F̅_{c} will oscillate proportionately.

For any point along the tube 10, for example a point 14, a displacement vector can be represented for small amplitudes as lying along the Y-axis only. As the tube 10 is forced to oscillate by a sinusoidal driver about its pivot point 16 with very small amplitude, and with the point 14 far from the pivot point 16, then the magnitude of its displacement, velocity and acceleration vectors can be represented by a graph shown in Figure 2 of the accompanying drawings. The displacement of the point 14 along the Y-axis is shown by a solid line 20. The velocity v of the point 14 is shown by a dash double dot line 22: this is in the units of, for example, m/s and represents dy/dt, that is the first derivative of displacement with respect to time.

The acceleration A is shown by a solid line 26 and represents the second derivative of displacement with respect to time, namely d²y/dt², being in units of, for example, m/s².

If there is a fluid flowing in the tube 10, a force F̅_{c} = 2mw̅ x v̅, acting on the flowing mass, will also be developed. By Newton's third law, there will be developed an equal and an opposite force -F̅_{c} which acts on the tube 10 itself and is associated with an acceleration A̅', with -F̅_{c} and A̅′ being directed along the Y-axis. The magnitude of A̅' is shown by a dashed line 28. From the definition of the force -F_{c} set forth above, it can be seen that this force is proportional to the velocity of the point 14, which is 90° out of phase with the acceleration due to the driving force applied to the tube 10. The resultant force acting at the point 14 will be the sum of the driving force and the force -F̅_{c}, with these two forces being 90° out of phase. A dot-dash line or curve 24 represents the sum associated with the accelerations A̅ plus A̅', which is proportional to the sum of the driving force and the force -F̅_{c}. A phase difference of 0̸ between the original driving acceleration and the resultant summed acceleration will, therefore, be a direct measurement of the force -F̅_{c} which is directly proportional to the mass flow rate.

If the driving force is sinusoidal, then its displacement, velocity and acceleration will likewise be sinusoidal and vary by 90° and 180° respectively. This allows the phase difference 0̸ to be equal regardless of whether it is measured relative to the displacement, velocity or acceleration functions of the drive force versus resultant drive force plus the force -F̅_{c}.

Our European Patent Application Publication No. EP-A-0 196 150 discloses apparatus for measuring the mass flow rate of a fluid flow, the apparatus comprising a pair of conduits each arranged to receive approximately half the total fluid flow, drive means for oscillating the conduits, at their mid point, towards and away from each other at a selected frequency, and a sensor for sensing motion of the conduits on either side of the mid point for sensing phase difference between the sensors. The apparatus of EP-A-0 196 150 uses straight parallel conduits, and a change in temperature or thermal gradient between the conduits and their supports may result in the conduits being subject to high stress leading to performance degradation or possibly, in the extreme, to failure of the conduits.

PCT Patent Application Publication No. WO-A-86/00699 discloses apparatus for measuring the mass flow rate of a fluid flow, the apparatus comprising:
a pair of conduits each arranged to receive approximately half the total fluid flow and each wound to form a spiral coil of predetermined diameter and pitch and of opposite sense ;
drive means for oscillating the conduits towards and away from each other at a selected frequency; and
a pair of sensors for sensing motion of the conduits on respective sides of the drive means for sensing phase difference between the sensors.

In that disclosed arrangement, the spiral conduits are wound about a line perpendicular to the inlet-outlet axis, and also are wound in the same sense (direction) so as to be substantially mutually parallel. This results in a relatively cumbersome arrangement.

The present invention provides apparatus of the type set out above, characterised in that:
the conduits are wound about a common centre line extending between a fluid flow inlet and a fluid flow outlet to form spiral coils having a mid cross-over point and a cross-over point on either side of the mid cross-over point;
the drive means is positioned between the conduits at the mid cross-over point; and
the sensors are positioned between the conduits at the cross-over points on either side of the mid cross-over point.

The conduits thus act as spiral wound springs absorbing, without distortion, the otherwise deleterious effects of temperature changes and thermal gradients.

The invention may therefore be so embodied as to provide apparatus for measuring mass flow rate which is self-compensating for changes in temperature and thermal gradients, and which may be of high accuracy and resolution.

Apparatus in accordance with the invention for measuring mass flow rate may be so implemented as to be simple in design, rugged in construction and economical to manufacture.

The invention will now be further described, by way of illustrative and non-limiting example, with reference to the accompanying drawings, in which:
Figure 1 is a diagram showing a coordinate system in which a tube or conduit for carrying a mass flow of fluid can be rotated to illustrate the occurrence of a force F̅_{c};
Figure 2 is a graph showing various characteristics of motion and forces experienced at a certain point on the tube or conduit shown in Figure 1;
Figure 3 is a side elevational view of an apparatus for measuring the mass flow rate of a fluid flow, the apparatus being substantially as disclosed in EP-A-0 196 150 (cited above);
Figure 4 is a schematic representation of the movement experienced by conduits of the apparatus;
Figure 5 is a diagram showing the maximum amplitude of an oscillating conduit;
Figure 6 is a graph of two sinusoidal curves which are of equal frequency but out of phase, showing a time difference t₁ between them; and
Figures 7 and 8 are, respectively, a plan view and a side elevational view of an apparatus embodying the invention.

Figure 3 shows an apparatus or device substantially as disclosed in EP-A-0 196 150 (cited above) which is used for measuring the mass flow rate of a fluid supplied to an inlet connection 30. The inlet connection 30 is connected to a first support or support structure 32 which fixes in position ends 34 and 35 of a pair of straight parallel conduits or tubes 36 and 37. A Y-shaped passage 38 is defined in the support 32 for dividing the mass flow into the connection 30 into two at least approximately equal parts. Thus, half the mass flow is supplied to the conduit 36 and the other half to the conduit 37.

The conduits 36 and 37 have opposite ends 42 and 43 respectively, which are connected to a second support or support structure 40 which carries an outlet connection 44. A Y-shaped passage 46 is defined in the support 40 for combining the flows of the conduits 36 and 37 back together and into the discharge connection 44.

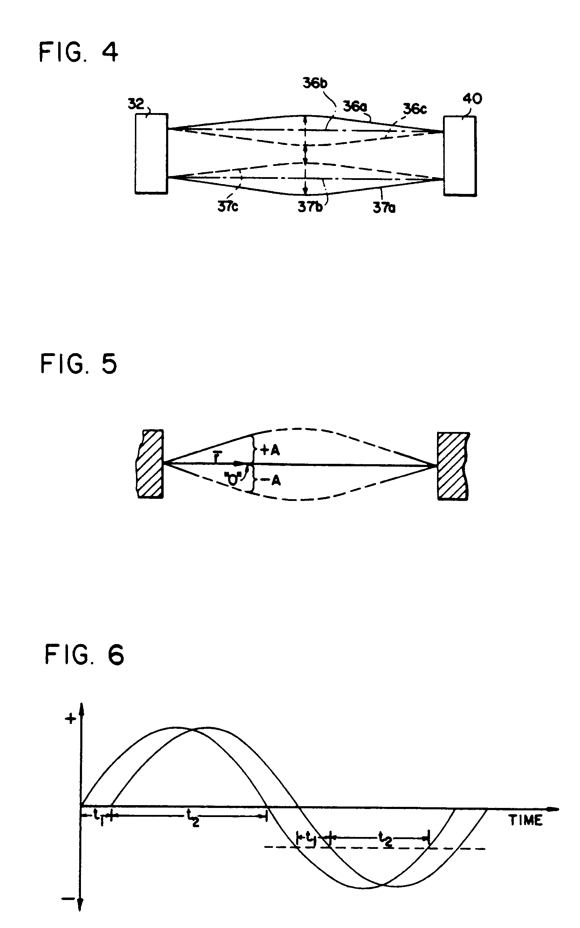

A driving mechanism or driver 48 is provided near the middle of and between the conduits 36 and 37. The driving mechanism 48 includes a solenoid coil 54 which is fixed, for example, to the conduit 36 (at a point "u"), and a permanent magnet 52 which rides in the coil 54 and is fixed to the conduit 37 (at a point "v"). By applying electricity to the coil 54 at a selected frequency, the conduits 36 and 37 can be made to oscillate towards and away from each other in an up and down direction. Figure 4, which is a schematic representation of the apparatus shown in Figure 3, shows the conduits 36 and 37 as lines. The maximum amplitude of the displacement that the conduits 36 and 37 achieve away from each other are shown by solid lines 36a and 37a. The maximum approach is shown by dotted lines 36c and 37c and the rest positions of the conduits 36 and 37 are shown by dot-dash lines 36b and 37b.

Referring again to Figure 3, the conduits 36 and 37 are provided with a pair of sensors 56 and 58 which are spaced apart from each other and positioned on opposite sides of the driving mechanism 48. The sensor 56 comprises a permanent magnet 62 which is magnetically coupled to a coil 66, the magnet and coil being connected to the conduits 37 and 36, respectively, (at points "b" and "a", respectively). In a similar fashion, the sensor 58 includes a permanent magnet 72 which rides in a coil 76, the magnet and coil being connected to the conduits 37 and 36, respectively (at points "d" and "c", respectively).

By oscillating the conduits 36 and 37 in the manner shown in Figure 4, sinusoidal currents are induced in the coils 66 and 76. These signals are proportional to the velocities of the conduits 36 and 37 towards and away from each other at the locations of the respective sensors 56 and 58.

When no fluid is passing through the conduits 36 and 37, the oscillation applied by the driving mechanism 48 to the mid-points of the conduits 36 and 37 will generate signals in the sensors 56 and 58 which are in phase with each other and in phase with the velocity of the driving mechanism 48. However, when fluid passes through the conduits 36 and 37, a phase difference appears between the signals of the sensors 56 and 58. The sensor 56 generates a velocity signal which lags behind the velocity of the driving mechanism 48 and the sensor 58 generates a signal which leads the velocity of the driving mechanism 48.

A phase measuring device 80 is connected to the sensors 56 and 58, as well as to the driving mechanism 48 or at least a power supply thereof, for measuring the phase lead and phase lag of the respective velocity signals. The phase lead and phase lag, relative to the velocity of the driving mechanism 48, is related directly to the mass flow rate of the fluid flowing through the conduits 36 and 37.

Figure 5 is a schematic illustration of one of the conduits 36 and 37. The position of one of the sensors 56 and 58 is shown at "o". This is at a point spaced by a distance r from the closest support for the conduit. At the point "o", the conduit executes an upward swing having a maximum amplitude of +A and a downward swing having a maximum amplitude of -A.

In the following analysis, displacement from the point "o" is designated by the letter y.

For any point on the flow tube, the displacement y of the tube from its rest position, while the tube is being forced to oscillate at resonance with a maximum amplitude A in simple harmonic motion, is given by:
- y =: A sin wt

where
- y =: the displacement from the rest position;
- A =: the maximum amplitude;
- w =: 2 πf;
- f =: the resonant frequency; and
- t =: time (t = 0 when the oscillation begins).

Since the tube is fixed at both ends and can only move transversely to its own rest axis, the displacement y is up and down. The velocity v of the point "o" up and down is then:$\text{v = dy/dt = wA cos wt}$
and its acceleration a is then:$\text{a = dv/dt = d²y/dt² = -w²A sin wt}$
The force -F̅_{c} (a vector) acting on the point "o" will be up and down, like the induced oscillations, and will follow the relationship:$\text{-} {\overline{\text{F}}}_{\text{c}} {\text{= -2m}}_{\text{c}} {\overline{\text{w}}}_{\text{c}} \text{x} {\overline{\text{V}}}_{\text{c}}$
where
- -F̅_{c} =: the apparent force resulting from the effect of the angular velocity on the moving fluid;
- mc =: the mass of fluid flowing past the point "o";
- w̅_{c} =: the angular velocity of the point "o", which equals |V̅/R| (V̅ = w̅ x r̅); and
- V̅_{c} =: the velocity of the fluid flowing past the point "o".

If k = the spring constant of the tube at the point "o", then the induced oscillating force amplitude is given by:$\text{|} \overline{\text{F}} \text{| = -ky = -kA sin wt}$
Since the two forces act in the same directions, their magnitudes can be summed directly to give:$\text{F - Fc = |} \overline{\text{F}} \text{| + |-} {\overline{\text{F}}}_{\text{c}} {\text{| = (-2m}}_{\text{c}} {\text{V}}_{\text{c}} \text{V/r) + (-kA sin wt)}$
Substituting V = wA cos wt gives:${\text{F - F}}_{\text{c}} {\text{= (-2m}}_{\text{c}} {\text{V}}_{\text{c}} \text{/r) wA cos wt-kA sin wt}$
Since m_{c},r,V_{c},w,w² and A are all constants for a constant mass flow rate, Equation (7) reduces to:${\text{F - F}}_{\text{c}} \text{= B1 cos wt + B2 sin wt}$
where${\text{B1 = -2wAm}}_{\text{c}} \text{Vc/r}$
and$\text{B2 = -kA.}$
The sum B1 cos wt + B2 sin wt shown in Equation (8) may be expressed as:$\text{B1 cos wt + B2 sin wt = γsin (wt + β)}$
where$\text{γ = (B1² + B2²)1/2}$
and$\text{β = arctan (B1/B2).}$

Equation (9) mathematically shows that the resultant force on the point "o" is at the same frequency as both the driving resonant oscillations, B1 cos wt and B2 sin wt, but is out of phase by an amount β where:${\text{β = arctan (B1/B2) = arctan (-2wAm}}_{\text{c}} {\text{V}}_{\text{c}} \text{/-kAr)}$
or:${\text{β = arctan (2wm}}_{\text{c}} {\text{V}}_{\text{c}} \text{/kr)}$
Since w = 2 πf, where f = the frequency of oscillations, which is held constant at the natural resonant frequency of the tube, r is a fixed distance and k is a constant, then${\text{β = arctan (m}}_{\text{c}} {\text{V}}_{\text{c}} \text{/α)}$
where$\text{α = (kr/4πf).}$
Therefore:${\text{m}}_{\text{c}} {\text{V}}_{\text{c}} \text{= α tan (β)}$
where${\text{m}}_{\text{c}} {\text{V}}_{\text{c}} \text{= the mass flow rate.}$

Thus, the force acting on the point "o" is sinusoidal and at the same frequency as the driving force and only differs by a phase change β. The displacement, velocity or acceleration functions (as well as any higher derivates of these) also differ in phase from the corresponding drive force by the same amount:$\text{β ± n π/2}$
where n is an integer.

For very small phase shifts, Equation (12) becomes

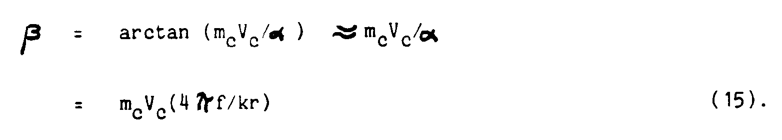

In order to eliminate the frequency dependent term f, it is necessary to examine the two signals, which differ only in phase 0̸, as they are represented in terms of amplitude against time in Figure 6.

The frequencies of the signals are equal and their period T is given by:$\text{T = l/f}$

The period can also be expressed as:$\text{T = 2 (t₁ + t₂)}$
where t₁ = the time difference between the signals, and$\text{t₂ = T/2 - t₁.}$
The relative phase angle β of the signals can then be defined as:$\text{β= πt₁ / (t₁ + t₂) = 2 πt₁f}$
Equations (18) and (15) yield:${\text{β = m}}_{\text{c}} {\text{V}}_{\text{c}} \text{(4 πf/kr) = 2 πt₁ f}$
and, therefore:${\text{m}}_{\text{c}} {\text{V}}_{\text{c}} \text{= mass flow rate = (kr/2) t₁}$
which eliminates the frequency dependency and requires only that the spring constant k, length r and time interval t₁ be known. The time interval t₁ can be measured using an oscilloscope and standard laboratory techniques.

For any set of conditions, k and r will be constants and, therefore, a measurement of t₁ will be directly proportional to the mass flow rate. It is obvious that t₁ can be measured along any line through the signals as shown in Figure 6 and is not restricted to the "zero crossing" base line. The time difference t₁ can be measured between any two points with equal first and second derivatives during any one cycle of the two signals regardless of gain or DC offset factors.

In the present design, the point "a" on the split parallel conduit arrangement of Figure 3 will follow the above progression. The mass flow rate can be directly measured by measuring the time difference t₁ between the induced signal at the point "u" and the mass flow rate effected signal at the point "a". With flow as shown in Figure 3, the point "a" will lag the point "u". Likewise, the point "b" will lag the point "v", the point "c" will lead the point "u" and the point "d" will lead the point "v". (The phase angle amplitude will be equal between all these respective points with leading points positive and lagging points negative.) Therefore, the total phase difference φ between the lag at the points "a" and "b" and the lead at the points "c" and "d" will provide a signal sampling the total direct mass flow rate through both the conduits 36 and 37 twice as a weighted average. The sum of the lead and lag phase angles will, therefore, cancel and provide the resonant frequency data necessary to maintain the tubes at their natural resonant frequency regardless of pressure, density or temperature variations.

The split parallel conduit arrangement of Figure 3 also allows both halves of the drive coil 48 and both of the sensor coils 66, 76 to be mounted to the flow conduits 36, 37 directly and help reduce common mode vibration noise and improve performance (provided that the sprung masses at the points "a", "b", "c" and "d" are all equal, and at the points "u" and "v" are equal).

Thus, advantages of the split parallel conduit approach of Figure 3 are as follows. Direct mass flow rate measurement proportional to the time measurement between points with equal first and second derivatives during any one cycle of two equal frequency signals; simple, rugged mechanical design; easy of assembly; small overall size; ease of installation; process fluid density insensitive; only slight temperature dependency; ease of scaling up and down in size; process fluid viscosity insensitive; and applicable to liquids, gases and slurries.

In the alternative, phase measuring devices, such as that shown in Figure 3 at 80, are known. An example is the Hewlett Packard Model 3575A. The phase difference from the driving point to the sensing point near the centre of the tubes, and the sensing point, spaced away from the centre, can thus be utilised as a measurement of mass flow rate. Sensors, as provided on both sides of the driving mechanism, increase accuracy.

While the apparatus shown in Figure 3 will, under ordinary conditions, give an accurate measurement of mass flow, a change in temperature or thermal gradient between the straight parallel conduits 36, 37 and their supports 32, 40 may result in the conduits being subject to high stress leading to performance degradation or possibly, in the extreme, to failure of the conduits.

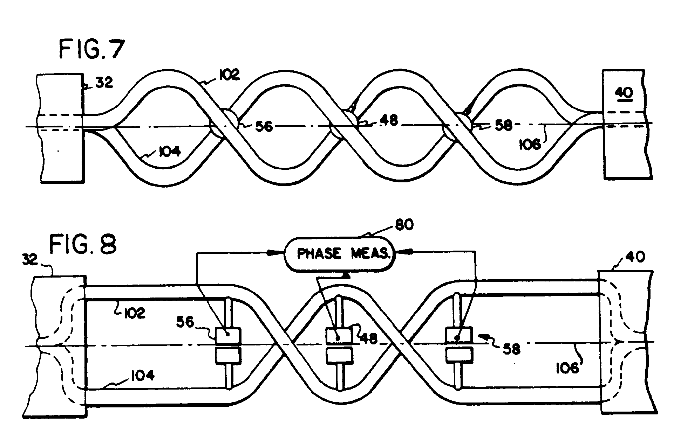

Figures 7 and 8 show a modified version of the apparatus of Figure 3, which modification constitutes an embodiment of this invention, wherein the effects of temperature changes and thermal gradients are nullified or at least reduced by the provision of a pair of helically shaped conduits 102, 104 wound in clockwise and anticlockwise directions, respectively, about a common centre line 106 at a selected pitch. Conduits of such shape act as spiral wound springs absorbing, without distortion, the otherwise deleterious effects of temperature changes and thermal gradients. The driving mechanism 48 and sensor 56 and 58 are conveniently located between cross-over points of the conduits 102 and 104.

## Claims

1. Apparatus for measuring the mass flow rate of a fluid flow, the apparatus comprising:
a pair of conduits (102, 104) each arranged to receive approximately half the total fluid flow and each wound to form a spiral coil for predetermined diameter and pitch and of opposite sense;
drive means (48) for oscillating the conduits (102, 104) towards and away from each other at a selected frequency; and
a pair of sensors (56, 58) for sensing motion of the conduits (102, 104) on respective sides of the drive means (48) for sensing phase difference between the sensors (56,58);
characterised in that:
the conduits (102,104) are wound about a common centre line (106) extending between a fluid flow inlet (32) and a fluid flow outlet (40) to form spiral coils having a mide cross-over point and a cross-over point on either side of the mid cross-over point;
the drive means (48) is positioned between the conduits at the mid cross-over point; and
the sensors (56,58) are positioned between the conduits at the cross-over points on either side of the mid cross-over point.

## Patentansprüche

1. Vorrichtung zur Messung der Massendurchflußrate eines Fluidstromes mit:
einem Paar von Leitungen (102, 104), die jeweils so angeordnet sind, daß sie etwa die Hälfte des gesamten Fluidstromes aufnehmen, und jeweils so gewunden sind, daß sie eine Spiralwicklung vorbestimmten Durchmessers und Steigung und in entgegengesetztem Sinne bilden,
Antriebseinrichtungen (48) zum Schwingen der Leitungen (102, 104) zueinander und voneinander weg in einer ausgewählten Frequenz und
einem Paar von Sensoren (56, 58) zum Abfühlen der Bewegung der Leitungen (102, 104) auf jeweiligen Seiten der Antriebseinrichtungen (48) zum Abfühlen eines Phasenunterschiedes zwischen den Sensoren (56, 58),
dadurch gekennzeichnet, daß:
die Leitungen (102, 104) um eine gemeinsame Mittellinie (106) gewunden sind, die sich zwischen einem Fluidstromeinlaß (32) und einem Fluidstromauslaß (40) erstreckt, um Spiralwicklungen mit einem mittleren Überkreuzungspunkt und einem Überkreuzungspunkt an jeder Seite des mittleren Überkreuzungspunktes zu bilden,
die Antriebseinrichtungen (48) zwischen den Leitungen bei dem mittleren Überkreuzungspunkt angeordnet sind und
die Sensoren (56, 58) zwischen den Leitungen bei den Überkreuzungspunkten an jeder Seite des mittleren Überkreuzungspunktes angeordnet sind.

## Revendications

1. Appareil pour mesurer le débit masse d'un écoulement de fluide, appareil comprenant :
une paire de conduits (102,104) agencés pour recevoir chacun la moitié environ du débit total de fluide , chacun de ces conduits étant enroulé en une bobine spirale d'un diamètre et d'un pas prédéterminés et de sens opposés,
un moyen d'entraînement (48) pour faire osciller les conduits (102,104) en les rapprochant et éloignant à une fréquence sélectionnée et
une paire de capteurs (56,58) pour détecter le mouvement des conduits (102,104) selon des côtés respectifs du moyen d'entraînement (48) pour déterminer les différences de phase entre les capteurs (56,58) ;
caractérisé en ce que :
les conduits (102,104) sont enroulés autour d'une ligne centrale commune (106) s'étendant entre une entrée de fluide (32) et une sortie de fluide (40) pour former des bobines spirales ayant un point de croisement médian et un point de croisement de chaque côté du point de croisement médian ;
un moyen d'entraînement (48) est placé entre les conduits au point de croisement médian et
les capteurs (56,58) sont placés entre les conduits aux points de croisement de chaque côté du point de croisement médian.
